# EUROPÄISCHE PATENTSCHRIFT

(11) **EP 1 713 411 B1**
(45) Veröffentlichungstag und Bekanntmachung des Hinweises auf die Patenterteilung: **26.06.2019**
(21) Anmeldenummer: 04790045.1
(22) Anmeldetag: 26.10.2004
(51) Int. Cl.: A61C 8/00

(54) **ZAHNIMPLANTAT**
DENTAL IMPLANT
IMPLANT DENTAIRE

(30) Priorität: 28.10.2003 DE 10350383
(43) Veröffentlichungstag der Anmeldung: 25.10.2006
(73) Patentinhaber: Z-Systems AG, 4702 Oensingen (CH)
(72) Erfinder: VOLZ, Ulrich, 88709 Meersburg (DE)
(74) Vertreter: Frei Patent Attorneys
(86) Internationale Anmeldenummer: PCT/DE2004/002382
(87) Internationale Veröffentlichungsnummer: WO 2005/044133

(56) Entgegenhaltungen:
- EP-A- 1 205 158
- WO-A-96/26685
- DE-A1- 10 009 448
- DE-C1- 19 620 394
- US-A- 4 259 072
- US-A- 5 642 996
- US-A- 5 931 675
- US-A- 6 126 662

## Beschreibung

Die Erfindung betriff ein Zahnimplantat bestehend, aus einem Grundkörper mit einem Gewindestück zum Verschrauben und Einwachsen in einem Kieferknochen sowie einem nach dem Einwachsen im Kieferknochen aus dem Zahnfleisch herausragenden Pfostenabschnitt, der zum Aufstecken einer Zahnkrone oder einer Suprastruktur dient, wobei der Grundkörper geteilt ist, so dass Pfostenmittel, die den Pfostenabschnitt umfassen, von einem restlichen Grundkörper mit dem Gewindestück abnehmbar sind, wobei zwischen Gewindestück und Pfostenabschnitt ein über das Gewinde des Gewindestücks senkrecht zu seiner Längserstreckung des Grundkörpers betrachtet auskragendes Zwischenstück vorhanden ist, dass die Teilung an der Außenkontur des Grundkörpers über dem auskragenden Zwischenstück beginnt, jedoch weiter im Inneren des Grundkörpers so verläuft, dass im restlicher Grundkörper eine Ausnehmung ausgebildet ist, die in axialer Richtung in das Zwischenstück hineinragt und in welcher ein Zapfen der Pfostenmittel angeordnet ist, und dass die Trennstelle der Teilung an der Außenkontur des Grundkörpers derart angeordnet ist, dass die Trennstelle innerhalb einer aufgesetzten Krone oder Suprastruktur liegt. Das erfindungsgemäße Zahnimplantat ist dadurch gekennzeichnet, dass das auskragende Zwischenstück als tulpenförmig Erweiterung ausgebildet ist, die am Gewindestück ansetzt, in einer S-Kurve auskragt und einen kreisförmigen Absatz bildet, der über eine Hohlkehle in den Pfosten übergeht und dadurch dass die Teile des Grundkörpers zumindest weitgehend aus Zirkonoxid oder einer Zirkon/Aluminiumoxidmischung bestehen.

### Stand der Technik:

Zahnimplantate werden als Zahnwurzelersatz nach Zahnverlust z.B. zur Aufnahme von fest zementierten Zahnkronen und Brücken sowie Suprastrukturen für die Verankerung von abnehmbaren Zahnprothesen verwendet.

Bei einer bekannten Ausführungsform besteht das Zahnimplantat aus einem Grundkörper, der ein Gewindestück zum Verschrauben und Einwachsen in einem Kieferknochen eines Patienten aufweist sowie einem nach dem Einwachsen im Kieferknochen aus dem Zahnfleisch herausragenden Pfostenabschnitt, der zur Aufnahme einer Zahnkrone dient. Bei der bekannten Ausführungsform ist der Grundkörper geteilt, so dass der Pfostenabschnitt für die Zahnkrone abnehmbar ist. In einer Ausführungsform lässt sich der Pfostenabschnitt abschrauben.

Die Einheilphase kann dadurch ohne Pfostenabschnitt für die Aufnahme einer Zahnkrone erfolgen, womit der Einheilprozess nicht durch eine Belastung eines herausstehenden Elements gestört wird.

Bei zweiteiligen Zahnimplantaten besteht jedoch immer die Gefahr eines Bruchs im Bereich der Trennstelle.

Die Patentschrift US 6126662, auf welche Offenbarung die zweitellge Form des Anspruchs 1 basiert, D1 (US 6'126'662) of fenbart Implantate zur Augmentation existierender Knochensubstanz oder zur Verankerung einer Prothese mittels Distraktionsosteogenese. US 6126662 offenbart ein zweiteiliges Kieferimplantat, das einen Grundkörper mit einem abnehmbaren Pfosten aufweist, wobei die Trennstelle der Teilung an der Aussenkontur des Grundkörpers von einer aufgesetzten Krone überdeckt wird, und bei welchem der abnehmbare Pfosten in einem koronal erweiterten Teil des Grundkörpers verankert wird. Das erfindungsgemäße Zahnimplantat unterscheidet sich durch eine tulpenförmige Erweiterung des auskragenden Zwischenstücks, welches in einer S-Kurve auskragt und einen kreisringförmigen Absatz bildet.Zudem lehrt die US 6126662 kein keramisches Implantat. Vorteilhafte Ausführungsformen der Erfindung gehen aus den abhängigen Patentansprüchen hervor.

### Aufgabe und Vorteile der Erfindung:

Der Erfindung liegt die Aufgabe zugrunde, ein geteiltes Zahnimplantat bereitzustellen, das eine verbesserte Stabilität besitzt.

Diese Aufgabe wird durch die Merkmale des Anspruchs 1 gelöst.

In den Unteransprüchen sind vorteilhafte und zweckmäßige Weiterbildungen der Erfindung beschrieben.

Die Erfindung geht von einem Zahnimplantat aus, das einen Grundkörper mit einem Gewindestück zum Verschrauben und Einwachsen in einem Kieferknochen sowie einen nach dem Einwachsen im Kieferknochen aus dem Zahnfleisch herausragenden Pfostenabschnitt umfasst, der zum Aufstecken einer Zahnkrone oder einer Suprastruktur dient, wobei der Grundkörper geteilt ist, so dass Pfostenmittel, die den Pfostenabschnitt umfassen, von einem restlichen Grundkörper, an dem das Gewindestück ausgebildet ist, abnehmbar sind. Zwischen Gewindestück und Pfostenabschnitt ist ein über das Gewinde senkrecht zur Längserstreckung des Grundkörpers betrachtet, auskragendes Zwischenstück vorhanden, und die Teilung beginnt an der Außenkontur des Pfostenabschnitts über dem auskragenden Zwischenstück, verläuft jedoch weiter im Inneren des Grundkörpers so, dass im restlichen Grundkörper eine Ausnehmung ausgebildet ist, die in axialer Richtung in das Zwischenstück hineinragt und in welcher ein Zapfen der Pfostenmittel angeordnet ist, wobei die Trennstelle der Teilung an der Außenkontur des Grundkörpers derart angeordnet ist, dass die Trennstelle innerhalb einer aufgesetzten Krone oder Suprastruktur liegt. Durch diese Art der Teilung bzw. Ausgestaltung des restlichen Grundkörpers kann eine im Vergleich zum Stand der Technik belastungsfähigere Verbindung der Pfostenmittel mit dem restlichen Grundkörper erreicht werden. Grundsätzlich ist eine Verbindung durch einen Zapfen mit einer passenden Ausnehmung erst dadurch in ausreichender Qualität möglich, dass im Ausnehmungsbereich zumindest des Zapfenansatzes durch das auskragende Zwischenstück eine Querschnittserhöhung vorhanden ist, so dass eine Querschnittsschwächung durch eine Ausnehmung für einen entsprechend stabilen Zapfen toleriert werden kann. Das Abdecken der Trennstelle mit der Krone oder einer Suprastruktur führt dazu, dass das Implantat mit Krone oder Suprastruktur nach außen nur eine Trennstelle aufweist, was in ästhetischer Hinsicht, aber auch im Hinblick auf die Stabilität des Gesamtsystems vorteilhaft ist.

Vorzugsweise ist die Auskragung so ausgebildet, dass sich eine nicht nur unwesentliche Abstützwirkung des zusammengefügten Grundkörpers gegen Vorkippen erreichen lässt.

Erfindungsgemäß ist das auskragende Zwischenstück tulpenförmig. Das heißt, tulpenförmig in Längserstreckung entlang seiner Außenkontur. Dadurch kann sich das Zwischenstück im Kiefer- und Zahnfleischbereich abstützen und dichtet zudem den Gewindeabschnitt ab, der im Kiefer einwachsen soll. Um durch die Ausnehmung für den Zapfen am Pfostenabschnitt im restlichen Grundkörper keine unerwünschte Querschnittsschwächung zu erhalten, ist es im Weiteren bevorzugt, wenn der Durchmesser des Zwischenstücks am größten Durchmesser um mindestens 50 % größer ist, als der Außendurchmesser des Gewindestücks. Erfindungsgemäß ist der Grundkörper mit einer Stufe zum Pfostenabschnitt derart zurückgesetzt ist, dass eine aufgesetzte Suprastruktur oder Zahnkrone mit ihrem unteren Rand auf der Stufe aufsitzt.

In diesem Zusammenhang ist die Trennlinie zwischen Pfostenstück und restlichem Grundkörper an der Außenkontur nach einem durch eine Hohlkehle realisierten Übergang vom Zwischenstück ausgebildet. Diese Ausgestaltung hat den Vorteil, dass z. B. eine Zahnkrone zwar überwiegend über die Pfostenmittel am Implantat befestigt ist, sich jedoch der untere Randbereich der Krone an dieser Hohlkehle, die nicht zu den Pfostenmittel, sondern zum restlichen Grundkörper gehört, abstützen kann. Durch diese geschickte Kraftverteilung am geteilten Implantat wird zusätzlich eine Bruchanfälligkeit deutlich herabgesetzt. Dabei ist es ausreichend, wenn sich die Hohlkehle über nur einen Teil des Umfangs des restlichen Grundkörpers erstreckt.

Damit eine zuverlässige stabile Verbindung zwischen restlichem Grundkörper und Pfostenmittel erzielbar ist, ist es überdies bevorzugt, wenn die Ausnehmung im restlichen Grundkörper zum Zapfen der Pfostenmittel passt. Die Abstimmung von Zapfen und Ausnehmung sollte vorzugsweise so erfolgen, dass der Zapfen für eine feste Verbindung zuverlässig in die Ausnehmung eingeklebt werden kann. Dabei ist ein zu satter Sitz des Zapfens in der Ausnehmung einer Klebeverbindung eher abträglich, da für die Klebeverbindung ein Klebemittelfilm zwischen Zapfen und Ausnehmung erforderlich ist.

In einer außerdem bevorzugten Ausgestaltung der Erfindung sind die Pfostenmittel mehrstückig. Hierdurch lassen sich die Pfostenmittel in vergleichsweise einfache Körper aufteilen, so dass eine Herstellung dieser Körper auch aus sehr hartem Material, wie z.B. Zirkonoxid durch spanabhebende Verfahren, wie z.B. Schleifen, möglich ist.

Darüber hinaus ist es vorteilhaft, wenn sich in einem ersten Pfostenstück ein zweites Pfostenstück erstreckt. Damit kann eine stabile Verbindung zwischen den Teilen der Pfostenmittel erreicht werden. Die Aufteilung der Pfostenmittel kann so erfolgen, dass das erste Pfostenstück den Pfostenabschnitt zur Aufnahme der Zahnkrone und das zweite Pfostenstück den Zapfen umfasst.

Eine hoch belastbare Verbindung kann insbesondere dadurch erreicht werden, wenn das zweite Pfostenstück als Säule, z.B. als Zylinder, beispielsweise als Kreiszylinder mit insbesondere abgerundetem Ende ausgebildet ist. Mit dieser Form lässt sich dann erstens der Zapfen für die Ausnehmung im restlichen Grundkörper und zweitens ein Abschnitt, der mit dem ersten Pfostenstück verbunden werden kann, zur Verfügung stellen.

Vorzugsweise ist das erste Pfostenstück, insbesondere bei einem säulenartigen zweiten Pfostenstück hülsenartig ausgebildet, so dass es auf das zweite Pfostenstück aufsteckbar ist. Der Querschnitt der Hülsendurchbrechung ist vorzugsweise passend zum Querschnitt des säulenartigen zweiten Pfostenstücks.

Um eine sichere Verankerung einer Krone auf dem Zahnimplantat zu gewährleisten, wird im Weiteren vorgeschlagen, dass die Pfostenmittel und der restliche Grundkörper so ausgebildet sind, dass sie um ihre Längsachse verdrehsicher aneinander fügbar sind. Vorzugsweise weist eines der beiden Bauteile eine Nase auf, die sich in eine entsprechende Ausnehmung am anderen Bauteil einfügen lässt.

Für eine Verdrehsicherung ist es ausreichend, wenn insbesondere das erste Pfostenstück und der restliche Grundkörper derart ineinander greifen, dass eine Verdrehung um die Längsachse der Körper blockiert ist.

Um eine zusätzliche Verbesserung der Stabilität des Implantats zu erzielen, wird im Weiteren vorgeschlagen, dass sich der Zapfen in der passenden Ausnehmung in axialer Richtung bis in den Gewindeabschnitt erstreckt.

Im Querschnitt kann der Zapfen auch mehreckig sein, z.B. sechseckig. Bei einer entsprechenden Ausgestaltung, z.B. ebenfalls im Querschnitt mehreckigen, vorzugsweise sechseckigen Form der Ausnehmung erhält man eine hohe Stabilität gegen Verdrehen. Der Zapfen beginnt insbesondere bei einstückigem Pfostenmittel vorzugsweise über dem Zwischenstück und ist dort als Säule, mit z.B. einer mehreckigen, insbesondere sechseckigen Querschnittsfläche ausgebildet. Im Weiteren Verlauf ist es überdies günstig, wenn der Zapfen sich über z.B. einen Absatz im Bereich des Zwischenstücks verjüngt, so dass er bis zum Gewindestück deutlich an Querschnittsfläche verloren hat. Der Zapfen kann sich z.B. nach dem Absatz im Querschnitt konusförmig verjüngen. Durch diese Maßnahme wird eine Verankerung des Zapfens bis weit in den restlichen Grundkörper hinein gewährleistet, ohne jedoch im querschnittlich kleineren Gewindestückbereich den restlichen Grundkörper durch eine dazu passende Ausnehmung in einer Weise zu schwächen, dass dieser bruchgefährdet ist.

In einer außerdem bevorzugten Ausgestaltung der Erfindung ist der Pfostenabschnitt im Längsschnitt konusförmig. Das hat den Vorteil, dass sich eine Krone am Pfosten vergleichsweise einfach mit hoher Stabilität fixieren lässt.

In einer überdies vorteilhaften Ausgestaltung der Erfindung bestehen beide Teile des Grundkörpers zumindest weitgehend aus Zirkonoxid oder einer Zirkonoxid/Aluminiumoxidmischung. Zirkonoxid bzw. eine Mischung aus Zirkonoxid und Aluminiumoxid hat neben den Vorteilen einer Herstellbarkeit in Zahnfarbe und einer Beschleifbarkeit, eine vergleichsweise hohe Festigkeit. Außerdem hat es sich herausgestellt, dass ein Zahnimplantat aus diesem Material ein mindestens vergleichbar gutes Einwachsverhalten wie Glaskeramik oder Titan zeigt. Bei einer Mischung von Zirkonoxid (z.B. ZrO₂) und Aluminiumoxid (z.B. Al₂O₃) liegt der Anteil von Zirkonoxid bevorzugt bei ca. 75 % und der Anteil von Aluminiumoxid z.B. bei ca. 20 %. Sowohl bei der Mischung als auch bei einem Implantat, das überwiegend aus Zirkonoxid besteht, ist es darüber hinaus insbesondere vorteilhaft, wenn ein Anteil von ca. 5 % eines weiteren Oxids z.B. Ytriumoxid (Y₂O₂) beigefügt ist.

### Zeichnungen:

Zwei Ausführungsbeispiele der Erfindung sind in den Zeichnungen dargestellt und unter Angabe weiterer Vorteile und Einzelheiten näher erläutert. Es zeigen
- Figur 1: ein Zahnimplantat mit Zahnkrone in einer teilweise geschnittenen Seitenansicht,
- Figur 2: eine Unteransicht des Zahnimplantats (ohne Krone) nach Figur 1,
- Figur 3: eine Draufsicht auf das Zahnimplantat nach Figur 1 ohne Pfosten und Krone,
- Figur 4: eine Seitenansicht lediglich des Pfostens des Zahnimplantates nach Figur 1,
- Figur 5a bis 5c: ein Basisteil eines Grundkörpers in einer teilweise geschnittenen Seitenansicht (Figur 5a), einer Unteransicht (Figur 5c) sowie einer Draufsicht (Figur 5b) und
- Figur 6a bis 7: einen zweiteiligen Pfosten mit einem Hülsenelement in einer Seitenansicht (Figur 6a), einer Unteransicht (Figur 6c) und einem Schnitt entlang der Schnittlinie A-A (Figur 6b) sowie einem Zapfenelement in Seitenansicht (Figur 7).

### Beschreibung der Ausführungsbeispiele:

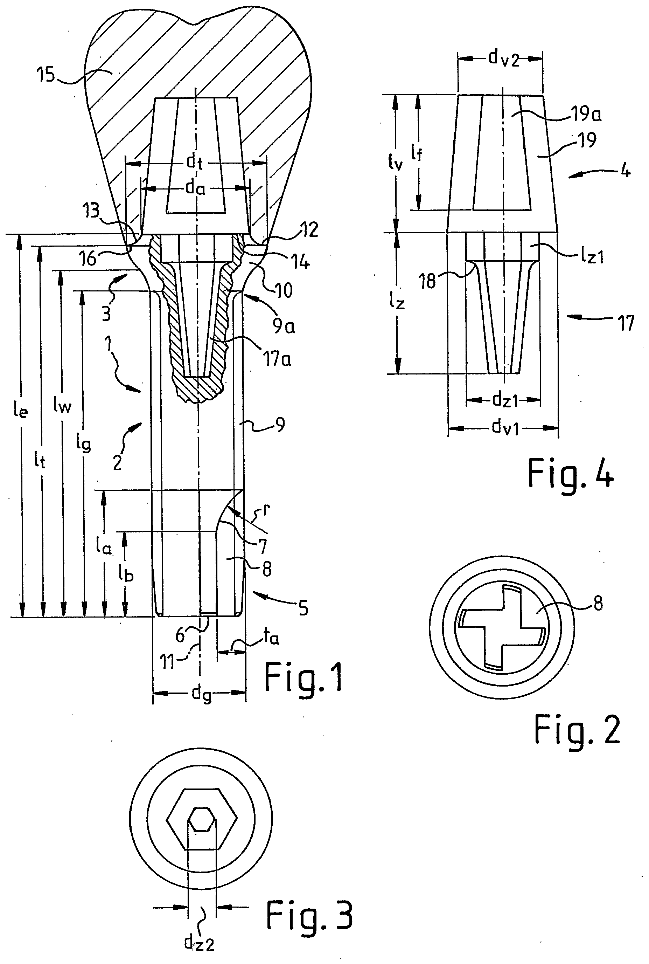

Das in den Figuren 1 und 4 dargestellte Zahnimplantat 1 umfasst ein Gewindestück 2, ein Zwischenstück 3 sowie einen Pfosten 4. Das Gewindestück 2, das Zwischenstück 3 und der Pfosten 4 sind konzentrisch zueinander positioniert. Im vorderen Bereich 5 verjüngt sich das Gewindestück 2, um den Eindrehvorgang beim Implantieren zu erleichtern. Zusätzlich sind über eine Länge lₐ bis zum Ende 6 des Gewindestücks 2 im Gewindestück 2 in einem Abschnitt 7 tiefer werdende Ausnehmungen 8 vorgesehen, die im Querschnitt betrachtet, Segmentform aufweisen (siehe hierzu insbesondere Figur 2). Über die Länge lₐ (z.B. 3 bis 6 mm, insbesondere 4,5 mm), beginnen die Ausnehmungen 8 am Außendurchmesser des Gewindes 9 und gehen im Längsschnitt betrachtet (siehe Figur 1) mit einem Radius r (z.B. 1,5 bis 5 mm, insbesondere 2 mm) in das Material des Gewindestücks 2, wobei die Ausnehmungen 8 ab einer Länge l_{b} (z.B. 0 bis 3,5 mm, insbesondere 3 mm) bis zum Ende 6 des Gewindestücks 2 nicht mehr tiefer werden, sondern parallel zu einer Längsachse 11 in einer Tiefe tₐ (z.B. 0,75 bis 2,5 mm, insbesondere 1 mm) im Gewindestück verlaufen, bevor sich dieses im Bereich 5 verjüngt. Der Durchmesser des Gewindestücks d_{g} beträgt beispielsweise 3 bis 5 mm, insbesondere 3,2 mm. Insgesamt sind vier Ausnehmungen 8 vorgesehen, so dass sich in der Unteransicht (Figur 2) eine Kreuzform ergibt.

In den Ausnehmungen 8 kann beim Implantieren Knochen bzw. Gewebe aufgenommen werden, der bzw. das so den Schneidvorgang des übrigen Gewindes nicht stören kann. Die sich längs erstreckenden Ausnehmungen 8 haben verglichen mit einem herkömmlichen Gewindeschneider somit die Funktion einer Art Spannut. Außerdem wird in der Einheilphase des Implantats durch Einwachsen von Knochen in diesem Bereich eine mechanische Ausdrehsicherung erzeugt.

Auf das Gewindestück 2 folgt das Zwischenstück 3, welches eine tulpenförmige Erweiterung 10 umfasst. Die tulpenförmige Erweiterung 10 setzt am Ansatz 9a des Gewindes an und kragt in einer leichten S-Kurve bis auf einen Durchmesser dₜ (z.B. 6 mm bei d_{g} = 3,25 mm) aus. Anschließend ist die tulpenförmige Erweiterung 9 durch einen zur Längsachse 11 senkrecht verlaufenden kreisringförmigen Absatz 12 zurückgesetzt und geht dann ab einem Durchmesser dₐ (z.B. 4,2 mm) über eine Hohlkehle 13 in einen Pfostenansatz 14 über. Am Ende des Pfostenansatzes 14 befindet sich die Trennstelle zum Pfosten 4. Bis zum Ende des Pfostenansatzes 14 weist das Implantat eine Länge lₑ (z.B. 12 bis 17 mm, insbesondere 13,5 mm) auf. Das Ende der tulpenförmigen Erweiterung befindet sich bei einer Länge lₜ (z.B. 13,1 mm bei lₑ = 13,5 mm). Der Wendepunkt der S-Kurve liegt bei l_{w} (z.B. 12,2 mm bei lₑ = 13,5 mm) und das Ende des Gewindes bei l_{g} (z.B. 11,5 mm bei lₑ = 13,5 mm).

Insbesondere im Zusammenspiel mit der Hohlkehle 13 bietet der Absatz 12 den Vorteil, dass sich eine auf dem Pfosten 4 aufgesetzte Krone 15 mit ihrem unteren Rand 16 dort abstützen kann. Somit müssen Kräfte, die auf die Krone wirken, nicht nur vom Pfosten 4 aufgenommen werden, sondern lassen sich teilweise auch auf das mit dem Gewindestück 2 einstückige Zwischenstück 3 übertragen. Dadurch wird insgesamt die Bruchanfälligkeit dieses zweiteiligen Zahnimplantats 1 herabgesetzt.

Die Trennstelle zum Pfosten 4 verläuft am oberen Rand des Pfostenansatzes 14 zunächst senkrecht zur Längsachse 11. Dann schließt sich jedoch ein im vorliegenden Beispiel sechseckiger Zapfen 17 an, der sich bis in das Gewinde 9 des Gewindestücks 2 erstreckt. Der Zapfen hat über eine Länge l_{z1} (z.B. 1 mm) von Spitze zu Spitze des Sechsecks einen Durchmesser d_{z1} (z.B. 2,5 mm). Nach der Länge l_{z} (z.B. 5 mm) verjüngt sich der Zapfen 17 zunächst über eine Hohlkehle 18 und dann konisch, ebenfalls bei Sechseckform im Querschnitt auf einen Durchmesser d_{z2} (siehe Figur 3) von Ecke zu Ecke des sechseckigen Querschnitts; d_{z2} beträgt z.B. 0,95 mm.

Der Zapfen 17 weist somit in seinem Ansatzbereich einen vergleichsweise großen Querschnitt auf, wodurch eine Bruchgefahr in diesem Bereich stark herabgesetzt wird. Diese Geometrie lässt sich jedoch nur verwirklichen, weil in diesem Bereich das Zwischenstück 3 eine ausreichende Querschnittsfläche durch die Auskragung 10 aufweist. Denn nur so kann vermieden werden, dass durch eine zum Zapfen 17 passende Ausnehmung 17a im Zwischen- und Gewindestück 2, 3 des Zahnimplantats 1 keine Querschnittsschwächung derart stattfindet, dass zwar der Zapfen 17 stabil genug ist, jedoch Bruchgefahr im verbleibenden Zahnimplantat 2, 3 besteht. In dem Bereich, in welchem sich das Zwischenstück 3 bis zum Gewindeansatz 9a verjüngt, wird auch der Querschnitt des Pfostenzapfen 17 über die Hohlkehle 18 und dann weiter durch den konischen Verlauf deutlich reduziert, so dass der Zapfen im Bereich des Gewindes 9 an seinem Ende einen vergleichsweise kleinen Querschnitt aufweist. Dadurch bleibt das Gewindestück 2 obgleich der Ausnehmung bruchstabil.

Der Pfosten kann über den Zapfen 17 z.B. in das verbleibende Zahnimplantat 2, 3 eingeklebt werden. Dabei wird durch die mehreckige Zapfenform mit dazu passender Ausnehmung 17a eine Verdrehsicherung realisiert.

Um eine zuverlässige Verankerung der Zahnkrone 15 am Pfosten 4 zu ermöglichen, weist dieser einen konusförmig verlaufenden Verankerungsabschnitt 19 auf. Eine Abflachung 19a gewährleistet mit einer entsprechenden Ausnehmung in der Krone 15, dass sich die Krone 15 auf dem Verankerungsabschnitt 19a nicht drehen kann. Der Verankerungsabschnitt 19 besitzt eine Länge lᵥ, die Abflachung eine Länge l_{f} (z.B. lᵥ = 4 bis 5 mm, insbesondere 4,9 mm, l_{f} = 4 bis 5 mm, insbesondere 4,1 mm) .

Der Durchmesser des Verankerungsabschnitts 19 beträgt am Pfostenansatz 14 dᵥ₁ und am konisch zulaufenden distalen Ende dᵥ₂ (z.B. dᵥ₁ = 3,5 bis 4,5 mm, insbesondere 3,8 mm, dᵥ₂ = 2,5 bis 4 mm, insbesondere 2,9 mm).

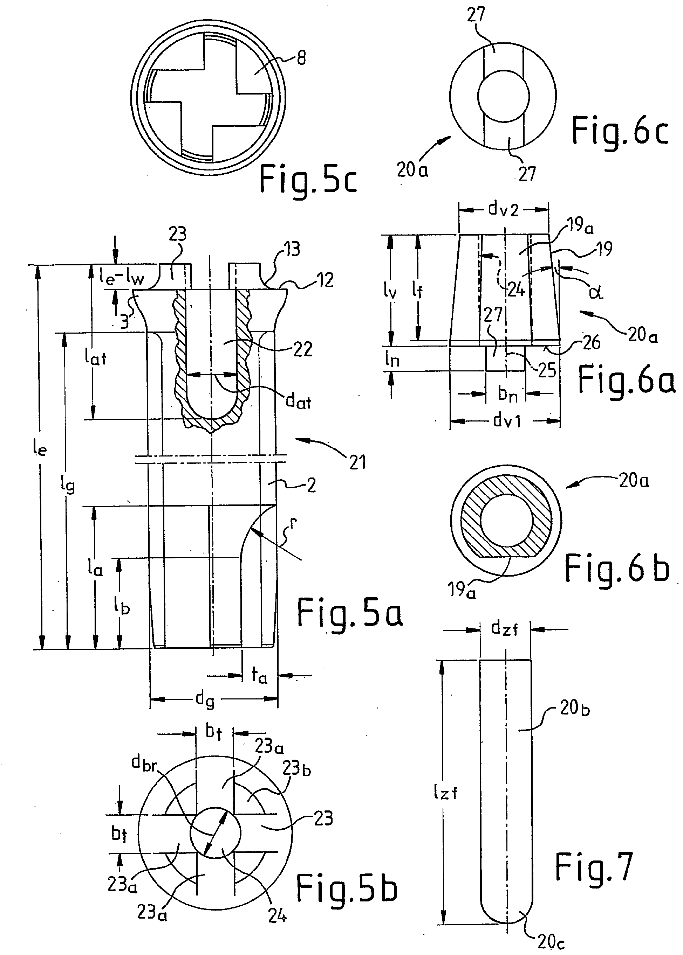

In den Figuren 5a bis 7 ist ein weiteres Ausführungsbeispiel eines Zahnimplantats in Einzelteilen dargestellt. Im Unterschied zum Zahnimplantat 1 gemäß der Figuren 1 bis 4 ist bei dem Zahnimplantat gemäß der Figuren 5a bis 7 ein Pfosten zweigeteilt und besteht aus einem Hülsenelement 20a mit einem konusförmig verlaufenden Verankerungsabschnitt 19 sowie einem zylindrischen Zapfenelement 20b. Entsprechende Teile wie beim Zahnimplantat 1 gemäß der Figuren 1 bis 4 sind in den Figuren 5a bis 6c mit gleichen Bezugszeichen und Längen- bzw. Durchmesserbezeichnungen versehen. Das Hülsenelement weist, wie beim Zahnimplantat 1 einen Verankerungsabschnitt 19 auf, der konusförmig verläuft.

Ein Basisteil 21 des Grundkörpers entspricht im Wesentlichen dem Basisteil des Zahnimplantats 1 mit Gewindestück 2 und Zwischenstück 3, abgesehen von einer unterschiedlichen Dimensionierung, einer sich von der Ausnehmung 17a unterscheidenden Ausnehmung 22 sowie einem Pfostenansatz 23 der sich durch im Kreuz angeordnete Rastnuten 23a (siehe insbesondere Figur 5b) von dem Pfostenansatz 14 des Zahnimplantats 1 unterscheidet.

Das Basisteil 21 weist beispielhaft folgende Längen, Radien bzw. Durchmesser auf: lₐ = 5,5 mm, l_{b} = 3,5 mm, l_{g} = 14 mm, lₑ = 16,55 mm, r = 2,42 mm, d_{g} = 5 mm, tₐ = 1,4 mm.

Die Ausnehmung 22 besitzt eine Tiefe lₐₜ (z.B. 6 mm) und einen Durchmesser dₐₜ (z.B. 2 mm). Der untere Bereich der Ausnehmung 22 ist kugelig abgerundet.

Entsprechend passend dazu ausgeformt ist das Zapfenelement 20b mit einer Länge l_{zf} (z.B. 10,3 mm) und einem kugeligen Ende 20c. Der Durchmesser d_{zf} des Zapfenelements 20b ist allerdings um wenigstens 1/100 mm kleiner als der .Durchmesser dₐₜ der Ausnehmung 22, damit das Zapfenelement 20b problemlos in die Ausnehmung 22 eingeführt und vorzugsweise darin verklebt werden kann.

Auf das Zapfenelement 20b wird beim Aufbau des Pfostens das Hülsenelement 20a geschoben, das konzentrisch eine entsprechende Bohrung 24 mit einem gleichen Durchmesser d_{br} wie der Durchmesser dₐₜ der Ausnehmung 22 aufweist.

Das Hülsenelement 20a weist wie der Pfosten 4 eine Abflachung 19a auf, um eine entsprechend darauf aufgesetzte Krone gegen Verdrehen zu sichern. Damit eine Verdrehung um eine Längsachse 25 des Hülsenelements 20a in Bezug auf das Basisteil 21 nach Zusammenfügen der einzelnen Teile sicher vermieden wird, besitzt das Hülsenteil über ein unteres Ende 26 vorstehende Nasen 27, die in zwei Nuten 23a im Pfostenansatz 23 eingreifen. Im Übrigen liegt das Ende 26 auf Flächen 23b des Pfostenansatz 23 auf.

Das Hülsenelement 20a hat eine konische Außenkontur mit z.B. einem Neigungswinkel α von 5 Grad bei einem unteren Durchmesser dv1 und einem oberen Durchmesser dv2 (z.B. dᵥ₁ = 4,2 mm, dᵥ₂ = 3,45 mm). Die Nase 27 hat eine Breite bₙ (z.B. 1,49 mm), die dazu passenden Nuten eine Breite bₜ (z.B. 1,5 mm). Die Dimensionierung ist vorzugsweise so, dass Nasen 27 in den Nuten 23a beim Einsetzen nicht klemmen. Durch die Kreuzanordnung der Nuten 23a kann die Hülse wahlweise um 90 Grad versetzt auf dem Basisteil 21 aufgesetzt werden.

Die Tiefe der Nuten (lₑ-l_{w}) bzw. die Länge der Nase lₙ beträgt beispielhaft 1 mm.

Die zweigeteilte Ausführungsform des Pfostens mit einem Hülsenelement 20a und einem Zapfenelement 20b lässt sich im Vergleich zu einem Pfosten 4, insbesondere dann, wenn das Implantat aus sehr hartem Material aufgebaut werden soll, leichter, insbesondere durch spanabhebende Bearbeitung, z.B. Schleifen herstellen. Die Herstellungsvereinfachung ergibt sich im Wesentlichen dadurch, dass das Zapfenelement 20b eine gleichmäßigen Durchmesser besitzt, also nicht konisch verläuft.

Das das Hülsenelement 20a durchdringende Zapfenelement 20b, das sich weit in das Basisteil 21 in der Ausnehmung 22 erstreckt, sorgt für eine hohe Stabilität des Gesamtimplantats, obwohl dieses damit aus drei Teilen besteht.

### Bezugszeichenliste:

- 1: Zahnimplantat
- 2: Gewindestück
- 3: Zwischenstück
- 4: Pfosten
- 5: Vorderer Bereich
- 6: Ende
- 7: Abschnitt
- 8: Ausnehmung
- 9: Gewinde
- 9a: Gewindeansatz
- 10: Erweiterung
- 11: Längsachse
- 12: Absatz
- 13: Hohlkehle
- 14: Pfostenansatz
- 15: Krone
- 16: Unterer Rand
- 17: Zapfen
- 17a: Ausnehmung
- 18: Hohlkehle
- 19: Verankerungsabschnitt
- 19a: Abflachung
- 20a: Hülsenelement
- 20b: Zapfenelement
- 20c: Ende
- 21: Basisteil
- 22: Ausnehmung
- 23: Pfostenansatz
- 23a: Nut
- 23b: Fläche
- 24: Bohrung
- 25: Längsachse
- 26: Ende
- 27: Nase

## Patentansprüche

1. Zahnimplantat (1) bestehend aus einem Grundkörper (2,3, 4) mit einem Gewindestück (2) zum Verschrauben und Einwachsen in einem Kieferknochen sowie einem nach dem Einwachsen im Kieferknochen aus dem Zahnfleisch herausragenden Pfostenabschnitt (19), der zum Aufstecken einer Zahnkrone (15) oder einer Suprastruktur dient, wobei der Grundkörper (2, 3, 4,20a, 20b, 21) geteilt ist, so dass Pfostenmittel (4, 20a), die den Pfostenabschnitt umfassen, von einem restlichen Grundkörper (21) mit dem Gewindestück (2) abnehmbar sind, wobei zwischen Gewindestück (2) und Pfostenabschnitt (19) ein über das Gewinde (9) des Gewindestücks (2) senkrecht zu seiner Längserstreckung des Grundkörpers (2,3, 4,20a, 20b, 21) betrachtet auskragendes Zwischenstück (3) vorhanden ist, und wobei die Teilung an der Aussenkontur des Grundkörpers über dem auskragenden Zwischenstück (3) beginnt, jedoch weiter im Inneren des Grundkörpers (2,3, 21) so verläuft, dass im restlichen Grundkörper (21) eine Ausnehmung (17a, 22) ausgebildet ist, die in axialer Richtung in das Zwischenstück (3) hineinragt und in welcher ein Zapfen (17,20b) der Pfostenmittel angeordnet ist, und wobei die Trennstelle der Teilung an der Aussenkontur des Grundkörpers derart angeordnet ist, dass die Trennstelle innerhalb einer aufgesetzten Krone oder Suprastruktur liegt, **dadurch gekennzeichnet, dass** das auskragende Zwischenstück (3) als tulpenförmige Erweiterung ausgebildet ist, die am Gewindestück (2) ansetzt, in einer S-Kurve auskragt und einen zur Längsachse (11) senkrecht verlaufenden kreisringförmigen Absatz (12) bildet, der über eine Hohlkehle (13) in einen Pfostenansatz (14) übergeht und dass die Teile (2,3, 4,20a, 20b, 21) des Grundkörpers zumindest weitgehend aus Zirkonoxid oder einer Zirkon/Aluminiumoxidmischung bestehen.

2. Zahnimplantat nach Anspruch 1 , **dadurch gekennzeichnet, dass** der Durchmesser (dt) des Zwischenstücks (3) am grössten Durchmesser um mindestens 50 % grösser ist als der Aussendruchmesser (dg) des Gewindestücks.

3. Zahnimplantat nach Anspruch 1, **dadurch gekennzeichnet, dass** die Ausnehmung (17a, 22) im restlichen Grundkörper (2, 3,21) zum Zapfen (17, 20b) der Pfostenmittel (4, 20a) passt.

4. Zahnimplantat nach einem der vorhergehenden Ansprüche, **dadurch gekennzeichnet, dass** die Pfostenmittel (4, 20a) mehrstückig sind.

5. Zahnimplantat nach einem der vorhergehenden Ansprüche, **dadurch gekennzeichnet, dass** sich in einem ersten Pfostenstück (20a) ein zweites Pfostenstück (20b) erstreckt.

6. Zahnimplantat nach einem der vorhergehenden Ansprüche, **dadurch gekennzeichnet, dass** das zweite Pfostenstück (20b) den Zapfen umfasst und das erste Pfostenstück (20a) den Pfostenabschnitt (19) zur Aufnahme einer Zahkrone.

7. Zahnimplantat nach einem der vorhergehenden Ansprüche, **dadurch gekennzeichnet, dass** das zweite Pfostenstück als Säule, z. B. Zylinder (20b) mit insbesondere gerundetem Ende (20c) ausgebildet ist.

8. Zahnimplantat nach einem der vorhergehenden Ansprüche, **dadurch gekennzeichnet, dass** das erste Pfostenstück (20a) hülsenartig ist und auf das zweite Pfostenstück (20b) aufsteckbar ist.

9. Zahnimplantat nach einem der vorhergehenden Ansprüche, **dadurch gekennzeichnet, dass** die Pfostenmittel (4,20a) und der restliche Grundkörper (2,3, 21) durch entsprechende Formgebung so ausgebildet sind, dass sie um ihre Längsachse (25) verdrehsicher ineinander fügbar sind.

10. Zahnimplantat nach einem der vorhergehenden Ansprüche, **dadurch gekennzeichnet, dass** das erste Pfostenstück (20a) und der restliche Grundkörper (2,3, 21) durch entsprechende Formgebung. so ausgestaltet sind, dass eine Verdrehung um die Längsachse (25) der Körper blockiert ist.

11. Zahnimplantat nach einem der vorhergehenden Ansprüche, **dadurch gekennzeichnet, dass** sich der Zapfen (17, 20b) in axialer Richtung bis in den Gewindeabschnitt (9) erstreckt.

12. Zahnimplantat nach einem der vorhergehenden Ansprüche, **dadurch gekennzeichnet, dass** der Zapfen (17) im Querschnitt mehreckig ist.

13. Zahnimplantat nach einem der vorhergehenden Ansprüche, **dadurch gekennzeichnet, dass** der Zapfen (17), bezogen auf den zusammengesetzten Grundkörper, über dem Zwischenstück (3) beginnt und dort säulenartig mit einer mehreckigen Querschnittsfläche ausgebildet ist.

14. Zahnimplantat nach einem der vorhergehenden Ansprüche, **dadurch gekennzeichnet, dass** der Zapfen (17) sich über einen Absatz oder eine Hohlkehle (18) im Bereich des'Zwischenstücks (3) verjüngt.

15. Zahnimplantat nach einem der vorhergehenden Ansprüche, **dadurch gekennzeichnet, dass** die Ausnehmung (17a, 22) im restlichen Grundkörper (2, 3) einen dazu passenden Querschnitt besitzt.

16. Zahnimplantat nach einem der vorhergehenden Ansprüche, **dadurch gekennzeichnet, dass** der Pfostenabschnitt (19) an seiner Aussenkontur im Längsschnitt konusförmig ist.

## Claims

1. A dental implant (1) consisting of a basic body (2, 3, 4) with a threaded piece (2) for screwing and ingrowth in a jawbone as well as with a post section (19) which projects out of the gums after ingrowth in the jawbone and which serves for sticking on a tooth crown (15) or a superstructure, wherein the basic body (2, 3, 4, 20a, 20b, 21) is divided such that post means (4, 20a) which encompass the post section can be removed from a residual basic body (21) with the threaded piece (2), wherein an intermediate piece (3) which considered perpendicularly to the longitudinal extension of the basic body (2, 3, 4, 20a, 20b, 21) projects beyond the thread (9) of the threaded piece (2) is present between the threaded piece (2) and the post section (19), and wherein the division begins at the outer contour of the basic body above the projecting intermediate piece (3), but further in the inside of the basic body (2, 3, 21) runs such that a recess (17a, 22) is formed in the residual basic body (21), said recess projecting into the intermediate piece (3) in the axial direction and in which recess a pin (17, 20b) of the post means is arranged, and wherein the separation location of the division is arranged on the outer contour of the basic body in a manner such that the separation location lies within a placed-on crown or superstructure, **characterised in that** the projecting intermediate piece (3) is designed as a tulip-like widening which begins at the threaded piece (2), projects in an S-curve and forms an annulus-shaped shoulder (12) which runs perpendicularly to the longitudinal axis (11) and which merges via a fillet (13) into a post onset (14) and that the parts (2, 3, 4, 20a, 20b, 21) of the basic body consist at least largely of zirconium oxide or of a zirconium/aluminium oxide mixture.

2. A dental implant according to claim 1, **characterised in that** the diameter (dt) of the intermediate piece (3) at the largest diameter is at least 50% larger than the outer diameter (dg) of the threaded piece.

3. A dental implant according to claim 1, **characterised in that** the recess (17a, 22) in the residual basic body (2, 3, 21) matches the pin (17, 20b) of the post means (4, 20a).

4. A dental implant according to one of the preceding claims, **characterised in that** the post means (4, 20a) are multi-pieced.

5. A dental implant according to one of the preceding claims, **characterised in that** a second post piece (20b) extends in a first post piece (20a).

6. A dental implant according to one of the preceding claims, **characterised in that** the second post piece (20b) encompasses the pin and the first post piece (20a) encompasses the post section (19) for receiving a tooth crown.

7. A dental implant according to one of the preceding claims, **characterised in that** the second post piece is designed as a column, e.g. as a cylinder (20b) with an in particular rounded end (20c).

8. A dental implant according to one of the preceding claims, **characterised in that** the first post piece (20a) is sleeve-like and can be stuck onto the second post piece (20b).

9. A dental implant according to one of the preceding claims, **characterised in that** the post means (4, 20a) and the residual basic body (2, 3, 21), by way of suitable shaping, are designed such that they can be joined into one another in a rotationally secure manner with respect to their longitudinal axis (25).

10. A dental implant according to one of the preceding claims, **characterised in that** the first post piece (20a) and the residual basic body (2, 3, 31), by way of a suitable shaping, are designed such that a rotation about the longitudinal axis (25) of the body is blocked.

11. A dental implant according to one of the preceding claims, **characterised in that** the pin (17, 20b) extends in the axial direction to into the threaded section (9).

12. A dental implant according to one of the preceding claims, **characterised in that** the pin (17) is polygonal in cross section.

13. A dental implant according to one of the preceding claims, **characterised in that** the pin (17), with respect to the put-together basic body, begins above the intermediate piece (3) and there is designed in the manner of a column with a polygonal cross-sectional area.

14. A dental implant according to one of the preceding claims, **characterised in that** the pin (17) tapers via a shoulder a fillet (18), in the region of the intermediate piece (3).

15. A dental implant according to one of the preceding claims, **characterised in that** the recess (17a, 22) in the residual basic body (2, 3) has a cross section which matches this.

16. A dental implant according to one of the preceding claims, **characterised in that** the post section (19) at its outer contour is cone-shaped in the longitudinal section.

## Revendications

1. Implant dentaire (1) constitué d'un corps de base (2, 3, 4) présentant une partie filetée (2) permettant l'insertion et l'ancrage dans un os de mâchoire, ainsi qu'une section en montant (19) qui déborde hors de la gencive après l'ancrage dans l'os de mâchoire et qui sert à enficher une couronne dentaire (15) ou une superstructure,
le corps de base (2, 3, 4, 20a, 20b, 21) étant divisé de telle sorte que des moyens de montant (4, 20a) qui comportent la section en montant puissent être enlevés du reste du corps de base (21) qui présente la partie filetée (2),
une partie intermédiaire (3) prévue entre la partie filetée (2) et la section en montant (19) débordant au-delà du filet (9) de la partie filetée (2) perpendiculairement au sens de la longueur du corps de base (2, 3, 4, 20a, 20b, 21),
la division commençant sur le contour extérieur du corps de base, au-dessus de la partie intermédiaire (3) en débord, mais s'étendant plus loin à l'intérieur du corps de base (2, 3, 21) de telle sorte qu'une découpe (17a, 22) qui pénètre en direction axiale dans la partie intermédiaire (3) et dans laquelle un tourillon (17, 20b) des moyens de montant est disposé est formée dans le reste du corps de base (21),
l'emplacement de séparation de la division étant disposé sur le contour extérieur du corps de base de telle sorte que l'emplacement de séparation soit situé à l'intérieur d'une couronne ou superstructure qui ont été placées,
**caractérisé en ce que**
la partie intermédiaire (3) en débord est configurée comme évasement en tulipe qui se raccorde à la partie filetée (2), déborde suivant une courbe en S et forme un appendice (12) en anneau circulaire qui s'étend perpendiculairement par rapport à l'axe longitudinal (11) et qui se prolonge en un épaulement (14) de montant par l'intermédiaire d'un congé (13) et
**en ce que** les parties (2, 3, 4, 20a, 20b, 21) du corps de base sont constituées au moins largement d'oxyde de zirconium ou d'un mélange d'oxydes d'aluminium et de zirconium.

2. Implant dentaire selon la revendication 1, **caractérisé en ce qu'**en son diamètre le plus grand, le diamètre (dt) de la partie intermédiaire (3) est d'au moins 30 % plus grand que le diamètre extérieur (dg) de la partie filetée.

3. Implant dentaire selon la revendication 1, **caractérisé en ce que** la découpe (17a, 22) s'adapte dans le reste du corps de base (2, 3, 21) au tourillon (17, 20b) des moyens de montant (4, 20a).

4. Implant dentaire selon l'une des revendications précédentes, **caractérisé en ce que** les moyens de montant (4, 20a) sont en plusieurs pièces.

5. Implant dentaire selon l'une des revendications précédentes, **caractérisé en ce qu'**une deuxième pièce de montant (20b) s'étend dans une première pièce de montant (20a).

6. Implant dentaire selon l'une des revendications précédentes, **caractérisé en ce que** la deuxième pièce de montant (20b) comporte le tourillon et **en ce que** la première pièce de montant (20a) comprend la section en montant (19) qui reprend une couronne dentaire.

7. Implant dentaire selon l'une des revendications précédentes, **caractérisé en ce que** la deuxième pièce de montant est configurée comme colonne, par exemple comme cylindre (20b) dont une extrémité (20c) est en particulier arrondie.

8. Implant dentaire selon l'une des revendications précédentes, **caractérisé en ce que** la première pièce de montant (20a) a la forme d'une douille peut être enfichée sur la deuxième pièce de montant (20b).

9. Implant dentaire selon l'une des revendications précédentes, **caractérisé en ce que** les moyens de montant (4, 20a) et le reste du corps de base (2, 3, 21) sont configurés par façonnage approprié à permettre de les insérer l'un dans l'autre sans qu'ils puissent tourner autour de leur axe longitudinal (25).

10. Implant dentaire selon l'une des revendications précédentes, **caractérisé en ce que** la première pièce de montant (20a) et le reste du corps de base (2, 3, 21) sont configurés par façonnage approprié à bloquer leur rotation autour de leur axe longitudinal (25).

11. Implant dentaire selon l'une des revendications précédentes, **caractérisé en ce que** le tourillon (17, 20b) s'étend en direction axiale jusque dans la section filetée (9).

12. Implant dentaire selon l'une des revendications précédentes, **caractérisé en ce que** le tourillon (17) a une section transversale polygonale.

13. Implant dentaire selon l'une des revendications précédentes, **caractérisé en ce que** lorsque le corps de base a été assemblé, le tourillon (17) commence au-delà de la partie intermédiaire (3), et est ensuite configuré en montant de section transversale polygonale.

14. Implant dentaire selon l'une des revendications précédentes, **caractérisé en ce que** le tourillon (17) se rétrécit par l'intermédiaire d'un retrait ou d'un congé (18) au niveau de la partie intermédiaire (3).

15. Implant dentaire selon l'une des revendications précédentes, **caractérisé en ce que** dans le reste du corps de base (2, 3), la section transversale de la découpe (17a, 22) est adaptée au corps de base.

16. Implant dentaire selon l'une des revendications précédentes, **caractérisé en ce qu'**en coupe longitudinale, la section en montant (19) a un contour extérieur conique.
